# EUROPÄISCHE PATENTSCHRIFT

(11) **EP 0 997 430 B1**
(45) Veröffentlichungstag und Bekanntmachung des Hinweises auf die Patenterteilung: **21.06.2006**
(21) Anmeldenummer: 99119743.5
(22) Anmeldetag: 06.10.1999
(51) Int. Cl.: B66F 9/07, B66C 9/04

(54) **Verfahren zum Durchfahren einer Strecke mit einem kurvengängigen Regalförderfahrzeug und ein kurvengängiges Regalförderfahrzeug zum Durchfahren einer Strecke**
Method for running through a path with curves with a stacker crane and stacker crane for running through a path with curves
Procédé pour parcourir un trajet à courbes avec une grue gerbeuse et grue gerbeuse pour parcourir un trajet à courbes

(30) Priorität: 27.10.1998 DE 19849276
(43) Veröffentlichungstag der Anmeldung: 03.05.2000
(73) Patentinhaber: Sew-Eurodrive GmbH & Co. KG, 76646 Bruchsal (DE)
(72) Erfinder: Reichensperger, Markus, 69168 Wiesloch (DE)

(56) Entgegenhaltungen:
- DE-A- 3 342 184
- DE-A- 19 509 423
- "Fördermaschinen, ISBN 3-528-06626-1" 1998 XP002266932 * Seite 424 - Seite 438 * * Absatz [5.3.3]; Abbildungen 14-4,14-6,14-7 *

## Beschreibung

Die Erfindung betrifft ein Verfahren zum Durchfahren einer Strecke mit einem kurvengängigen Regalförderfahrzeug und ein kurvengängiges Regalförderfahrzeug zum Durchfahren einer Strecke.

Regalförderfahrzeuge sind aus dem Buch 'Fördermaschinen' (ISBN 3-528-06626-1) bekannt. Die zu durchfahrenden Strecken umfassen oft den Übergang von einer geraden Strecke mit Krümmungsradius unendlich zu einer Kurve mit endlichem Krümmungsradius. Wegen den sich daraus ergebenden und wegen den durch die Bewegung der Nutzlast verursachten Belastungen sind verschiedene Konstruktionen bekannt, die beispielsweise eine mechanische Abstützung nach oben aufweisen.

Es sind Regalförderfahrzeuge für Doppelschienensysteme und Einfachschienensysteme bekannt. Da viele Regalförderfahrzeuge in Streckenrichtung symmetrisch aufgebaut sind, ist 'vorne' und 'hinten' willkürlich festlegbar. Im einfachsten Fall ist ein Antrieb am Vorderrad vorhanden. Am Hinterrad muß sich kein weiterer Antrieb befinden. Manchmal wird jedoch durch den Einsatz eines Antriebes am Hinterrad das Antriebsmoment gleichmäßiger verteilt. Ein zusätzlicher Vorteil des Antriebes von vorderem und hinterem Rad ist, daß die jeweiligen Antriebe in kleineren Leistungsgrößen ausgeführt werden können und daher kostengünstig hergestellt werden können.

'Vorne' und /oder 'hinten' können sich auch jeweils zwei Antriebe befinden. Dabei wird dann während einer Kurvenfahrt das vordere Antriebsmoment auf den linken und rechten Antrieb entsprechend der zu durchfahrenden Krümmungsradien aufgeteilt, da in der Kurve das äußere Rad im Gegensatz zum inneren eine höhere Bahngeschwindigkeit hat. Das Gleiche gilt für die hinteren Antriebe.

Als Antriebe wurden oft Gleichstrom-Elektromotoren mit nachgeschaltetem Getriebe verwendet. Bedingt durch ihr 'weiches' Regelverhalten war das Durchfahren von Strecken unproblematisch. Jedoch sind die Kosten für solche Motoren hoch, insbesondere wenn man den Wartungsaufwand berücksichtigt.

Beim Einsatz moderner, kostengünstigerer, durch Frequenzumrichter angesteuerter und geregelter Asynchronmotoren oder Synchronmotoren treten beim Einfahren in Kurven große Querbeschleunigungen auf, die das Regalförderfahrzeug sogar zum Kippen bringen können. Deshalb muß deutlich langsamer gefahren werden. Aus der DE-A-195 09 423 ist ein Verfahren zur beschwindigkeitssteuerung eines Regalbediengerätes in kurvigen Abzweigungen, bei dem es vermieden wird, die gesamte Abzweigung mit reduzierter Geschwindigkeit durchzufahren.

Der Erfindung liegt die Aufgabe zugrunde, ein Verfahren zum Durchfahren einer Strecke mit einem kurvengängigen Regalförderfahrzeug und ein kurvengängiges Regalförderfahrzeug zum Durchfahren einer Strecke derart weiterzubilden, daß unter Vermeidung der vorgenannten Nachteile bei Änderung des Krümmungsradius der Strecke ein schnelles Durchfahren kostengünstig möglich ist.

Erfindungsgemäß wird die Aufgabe gelöst bei einem Verfahren zum Durchfahren einer Strecke mit einem kurvengängigen Regalförderfahrzeug nach den in Anspruch 1 angegebenen Merkmalen und bei einem kurvengängigen Regalförderfahrzeug nach den in Anspruch 11 angegebenen Merkmalen.

Insbesondere wird bei der Lösung als Istwert für das Steuer- und Regelverfahren das Maximum der Werte der erfaßten Bewegungsgrößen verwendet. Eine erfindungsgemäße Vorrichtung zeichnet sich besonders dadurch aus, daß der Frequenzumrichter derart gestaltet ist, daß der Istwert einer Bewegungsgröße auf den Sollwert der Bewegungsgröße nach einem geeigneten Steuer- und Regelverfahren für den Elektromotor geregelt wird und als Istwert für das Steuer- und Regelverfahren das Maximum der Werte der erfaßten Bewegungsgrößen verwendet wird.

Dabei hat die Strecke mindestens eine Änderung des Krümmungsradius. Bei einer geraden Strecke ist der Krümmungsradius unendlich, in einer Kreiskurve besitzt er einen endlichen konstanten Wert. In sonstigen Kurven liegen ständige Änderungen vor.

An zwei voneinander beabstandeten Orten werden erfindungsgemäß Bewegungsgrößen erfaßt und die Werte derselben dem Frequenzumrichter, der zum Antrieb des Regalförderfahrzeugs zugeführt. Dieser Frequenzumrichter ist derart gestaltet und wird derart betrieben, daß nach Zuführung der beiden Werte ein Istwert als Funktion der beiden zugeführten Werte gebildet wird. Sodann regelt der Frequenzumrichter den zum Antrieb zählenden Elektromotor derart, daß der Istwert im Idealfall im wesentlichen dem Sollwert entspricht. Als Istwert wird der Maximalwert der beiden erfaßten Werte verwendet.

Der wesentliche Vorteil des erfindungsgemäßen Verfahrens und des erfindungsgemäßen kurvengängigen Regalförderfahrzeugs liegt darin, daß bei Durchfahren eines Bereiches veränderter Krümmung mit dem kurvengängigen Regalförderfahrzeug die Querbeschleunigung keine hohen Werte erreicht und daher ein schnelles Durchfahren der Kurve ohne Gefahr der Überlastung oder des Umfallens des Regalförderfahrzeugs durchführbar ist. Ein weiterer Vorteil ist die Ermöglichung des Einsatzes von kostengünstigen Antrieben, bestehend aus die Elektromotoren und Frequenzumrichter.

In einer Weiterbildung des erfindungsgemäßen Verfahrens wird eine Änderung des Krümmungsradius detektiert. Wenn beispielsweise sich das Regalförderfahrzeug auf einer geraden Strecke bewegt, ist der Wert der beiden Bewegungsgrößen im wesentlichen gleich. Bei Eintritt in eine Abweichung von der geraden Strecke, ändert sich der Krümmungsradius. Das Erreichen und Durchfahren dieser Position wird detektiert. Von Vorteil ist dabei, daß das Steuer- und Regelverfahren des Frequenzumrichters abhängig von der Änderung des Krümmungsradius veränderbar ist.

In einer Weiterbildung des erfindungsgemäßen Verfahrens erhält das Steuer- und Regelverfahren einen Input für die Änderung des Krümmungsradius und berücksichtigt dies im Betrieb. Der Sollwert ist also bei dieser Weiterbildung veränderbar. Von Vorteil ist dabei, daß eine Anpassung des Sollwertes für die Bewegungsgröße an den Krümmungsradius ermöglicht wird. Daher sind solche Strecken schneller befahrbar, ohne einen kritischen Wert der Querbeschleunigung zu erreichen.

In einer Weiterbildung werden die Parameter des Steuer- und Regelverfahrens abhängig von den Bewegungsgrößen verändert. Dies verbessert die Regelgüte, d.h. der Istwert erreicht den Sollwert besser und schneller. Gerade beim Umschalten des Istwertes von einer ersten zu einer zweiten Bewegungsgröße ist dadurch eine bessere Anpassung an die neuen Verhältnisse durchführbar.

In einer Weiterbildung werden als Elektromotoren Asynchronmotoren oder Synchronmotoren eingesetzt. Von Vorteil ist dabei, daß solche Motoren kostengünstiger als Gleichstrommotoren sind.

In einer Weiterbildung werden die Bewegungsgrößen an Rädern gemessen. Von Vorteil ist, daß Sensoren zur Meßwerterfassung eingesetzt werden könne, die kostengünstig, robust und störsicher sind. Insbesondere sind die Drehzahlen der Räder erfaßbar.

In einer anderen Weiterbildung werden als Bewegungsgrößen Bahngeschwindigkeiten von Rädern gemessen. Von Vorteil ist dabei, daß die Meßwerte nicht abhängen von der Größe der Räder. Geeignete Sensoren sind beispielsweise Radar- oder optische Sensoren, die vom bewegten Regalförderfahrzeug zur Schiene hin messen.

In einer Weiterbildung wird das erfindungsgemäße Verfahren auf ein Regalförderfahrzeug angewendet, das ein Vorderrad und ein Hinterrad besitzt und an jedem Rad eine Einrichtung zur Drehzahlerfassung und einen Antrieb, der einen Elektromotor und einen Frequenzumrichter umfaßt. Von Vorteil ist dabei, daß das Steuer- und Regelverfahren in besonders einfacher Weise gestaltet werden kann. Ein weiterer Vorteil ist, daß von den Antrieben auch die Funktion der Drehzahlerfassung ausführbar ist. Insbesondere sind Steuer- und Regelverfahren einsetzbar, die ohne Winkelgeber, Inkrementalgeber, Resolver oder dergleichen den Elektromotor steuern und regeln und einen indirekten Wert der Drehzahl, also einen Schätzwert, an das Steuer- und Regelverfahren weitergeben.

In einer Weiterbildung wird der vordere Antrieb in Drehzahlregelung betrieben und der hintere Antrieb in Drehmomentenregelung, wobei der vordere Antrieb eine Drehmomentvorgabe für den hinteren Antrieb macht, also einen entsprechenden Sollwert vorgibt. Von Vorteil ist dabei die Aufteilung des Drehmomentes auf die beiden Antriebe, da somit kleinere Leistungsgrößen eingesetzt werden können.

In einer Weiterbildung ist der Sollwert des Drehmomentes des hinteren Drehmomentes ein vorgebbarer Wert des gesamten Drehmomentes. Von Vorteil ist dabei, daß ein Bruchteil, beispielsweise die Hälfte, fest einstellbar ist.

In einer Weiterbildung wird die Änderung des Krümmungsradius durch Sensoren oder Sensorsysteme detektiert. Beispielsweise können induktive Näherungsschalter des Regalförderfahrzeugs Geberfahnen detektieren, die an der Strecke befestigt sind. Von Vorteil ist die sichere Erkennung der genannten Position in der Strecke. Auch bei kleiner Geschwindigkeit ist dies durchführbar.

In einer anderen Weiterbildung wird die Änderung des Krümmungsradius erkannt, indem die gemessen Werte der Bewegungsgrößen, insbesondere der Drehzahlen, ausgewertet werden. Eine Änderung des Krümmungsradius ist erfindungsgemäß in einer Änderung der Werte der Bewegungsgrößen vorne und hinten möglich. Insbesondere ist am Wert der Differenz der Drehzahlen von vorderem und hinterem Antrieb die Änderung des Krümmungsradius erkennbar. Wegen Schwankungen der Meßwerte wird erst bei einem Überschreiten eines kritischen Wertes, bzw. eines Toleranzbandes, die Information über die Änderung des Krümmungsradius weitergegeben. Von Vorteil ist dabei das einfache Auswerteverfahren der vorhandenen Meßwerte.

Und das Entfallen von zusätzlichen Sensoren. Ein Toleranzband ist zusätzlich von Vorteil, da es die Fehleranfälligkeit vermindert.

In einer Ausführungsform des Regalförderfahrzeugs als Elektromotoren Synchron- oder Asynchronmotoren eingesetzt. Von Vorteil ist dabei, daß diese kostengünstiger sind als Gleichstrommotoren.

In einer Ausführungsform werden die Bewegungsgrößen am Vorderrad und am Hinterrad erfaßt. Von Vorteil ist dabei, daß marktübliche Geräte einsetzbar sind.

In einer weiteren Ausführungsform werden als Bewegungsgrößen die Drehzahl oder die Winkelgeschwindigkeiten erfaßt. Von Vorteil ist dabei, daß robuste, kostengünstige und störsichere Sensoren eingesetzt werden.

In einer weiteren Ausführungsform werden als Bewegungsgrößen die Bahngeschwindigkeiten erfaßt. Von Vorteil ist, daß marktübliche Sensoren, beispielsweise Radar- oder optische Sensoren, die vom bewegten Regalförderfahrzeug *aus* messen, einsetzbar sind.

Die weiteren Vorteile ergeben sich aus den Unteransprüchen.

### Bezugszeichenliste

- 1: Streckenabschnitt
- 2: Streckenabschnitt
- 3: Streckenabschnitt
- 4: Regal
- 5: Geber oder Geberfahnen
- 10: Regalförderfahrzeug
- 11: Hinterrad mit Antrieb
- 12: Vorderrad mit Antrieb
- 111: Frequenzumrichter
- 112: Frequenzumrichter
- 211: Motor am Hinterrad
- 212: Motor am Vorderrad
- 311: Winkelgeber am Hinterrad
- 401: Regler
- 402: Komparator
- 403: Regler
- 404: Motor mit Drehzahlerfassung
- 405: Schalter

Die Erfindung wird anhand von Abbildungen näher erläutert.

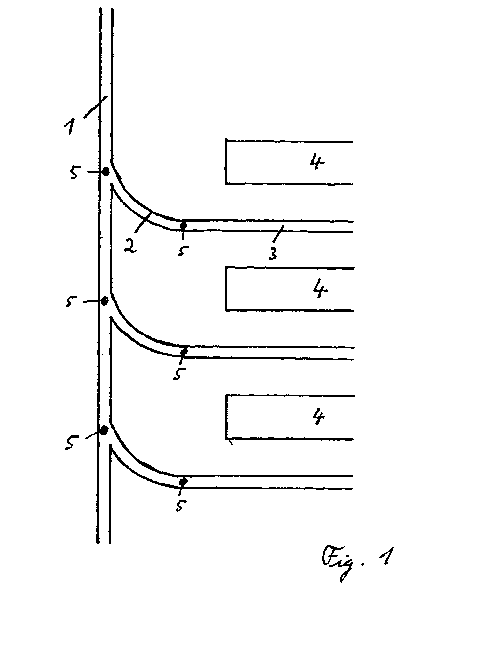

In der Figur 1 ist das Schienensystem für ein Regalförderfahrzeug im Regallager skizziert. Das Schienensystem führt mit einem geraden Streckenabschnitt 1, also unendlich großem Krümmungsradius in das Regallager herein. Nach einer Weiche ist ein Streckenabschnitt 2 angeordnet, der einen endlichen Krümmungsradius besitzt. Daran schließt sich ein Streckenabschnitt 3 im Bereich der Regale 4 an, der wiederum einen unendlichen Krümmungsradius besitzt.

Je nach genauer Ausführung der Strecke können im Bereich des Übergangs von 1 nach 2 auch Streckenabschnitte mit mehreren Krümmungsradien oder kontinuierlichem endlichen Wertebereich des Krümmungsradius ausgeführt sein.

Bei den Übergängen von Streckenabschnitten unterschiedlicher Krümmung sind Geberfahnen 5 bzw. magnetische Geber 5 positioniert. Entsprechend sind zugehörige Sensoren auf dem Regalförderfahrzeug positioniert. Auf diese Weise sind die Positionen des Überganges von Abschnitten unterschiedlicher Krümmung erkennbar.

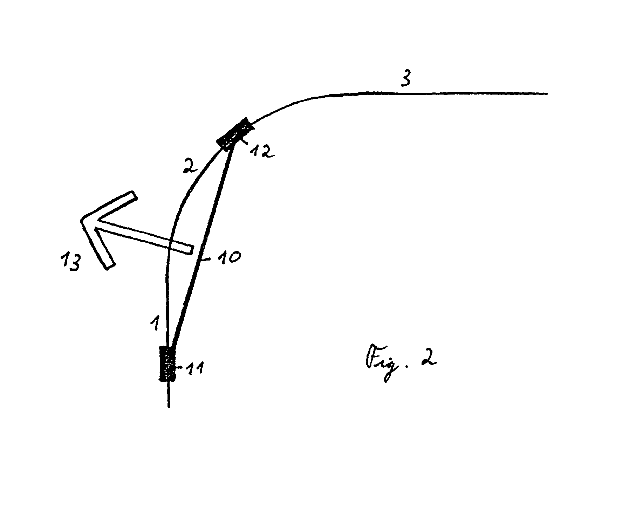

In der Figur 2 ist ein Regalförderfahrzeug 10 gezeigt, das vom geraden Streckenabschnitt 1 in den gekrümmten Streckenabschnitt 2 eintritt. Wenn sich das Hinterrad 11 mit konstanter Drehzahl oder auch Bahngeschwindigkeit auf der Strecke bewegt, wird das Vorderrad 12 beim Übergang vom Streckenabschnitt 1 in den gekrümmten Streckenabschnitt 2 immer schneller. Der Schwerpunkt des Regalförderfahrzeugs 10 erfährt eine Querbeschleunigung 13 in Normalenrichtung der Kurve 2. Wenn ein kritischer Wert der Querbeschleunigung 13 erreicht wird, wird das Regalförderfahrzeug 10 aus der Kurve geworfen oder fällt um.

Daher wird der Antrieb des Vorderrades 12 und der Antrieb des Hinterrades 11 geeignet gesteuert.

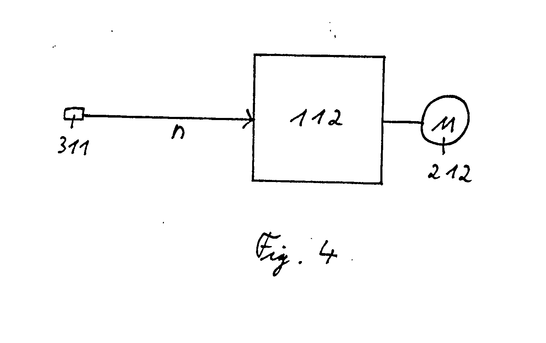

In der Figur 4 ist das Steuerprinzip eines einmotorigen Regalförderfahrzeugs gezeigt. Am Hinterrad ist ein Winkelgeber 311 montiert, der die Winkellage an den Frequenzumrichter 112 meldet. Der Frequenzumrichter 112 steuert den Motor 212 am Vorderrad. Der Frequenzumrichter 112 arbeitet in Drehzahlregelung. Es sind sowohl Steuer- und Regelverfahren einsetzbar, die mit Geber oder ohne Geber, also Sensoren zur Erfassung der Winkellage oder Sensoren zur Erfassung der Winkelgeschwindigkeit, arbeiten. Für die Durchführung des erfindungsgemäßen Verfahrens ist aber in beiden Fällen der Winkelgeber 311 nötig oder eine entsprechende Information. Als Istwert der Drehzahl wird das Maximum der Drehzahl am Hinterrad 11 und Vorderrad 12 ausgewählt.

In einem weiteren Ausführungsbeispiel wird der Sollwert der Drehzahl des Frequenzumrichters 112 nach Detektion der Kurve herabgesetzt. Die Detektion geschieht, indem der Quotient aus der Drehzahlen des Gebers 311 und der Drehzahl des vorderen Motors 212 beobachtet wird. Wenn dieser Quotient einen gewissen Wert überschreitet oder einen gewissen Wert unterschreitet, ist die Änderung des Krümmungsradius erkannt. Diese Information wird dann im Steuer- und Regelverfahren verwendet.

In einem weiteren Ausführungsbeispiel wird an den Frequenzumrichter 112 ein Sensor angeschlossen, der die Geber oder Geberfahnen 5 sicher erkennt.

In beiden letztgenannten Ausführungsbeispielen wird der Frequenzumrichter entsprechend ausgestaltet mit Software und Hardware, insbesondere auch entsprechenden Anschlußmöglichkeiten von Sensoren.

In einem weiteren Ausführungsbeispiel werden die Parameter der Regelung als Funktion der Krümmungsradien verändert. Die gesamte Regelstrecke ändert sich beim Umschalten auf den hinteren Drehzahlgeber 311, da das Drehmoment vorne wirkt und die Drehzahl am hinteren Rad gemessen wird. Im Normalfall werden aber die Parameter so eingestellt, daß der Regler optimal arbeitet, wobei zur Drehzahl ein gewisses Drehmoment gehört, bzw. zur Abweichung der Drehzahl eine entsprechende Drehmomentänderung. Entsprechendes gilt für andere Größen. Beim Umschalten des Istwertes als Maximum der Drehzahl von der vorderen auf die hintere Drehzahl wird der Parametersatz des Steuer- und Regelverfahrens ausgetauscht. Dadurch ist eine Verbesserung des Regelverhaltens erreicht.

Bei einem weiteren Ausführungsbeispiel wird der Parametersatz nicht einfach ausgetauscht sondern ständig angepaßt, also quasikontinuierlich optimiert.

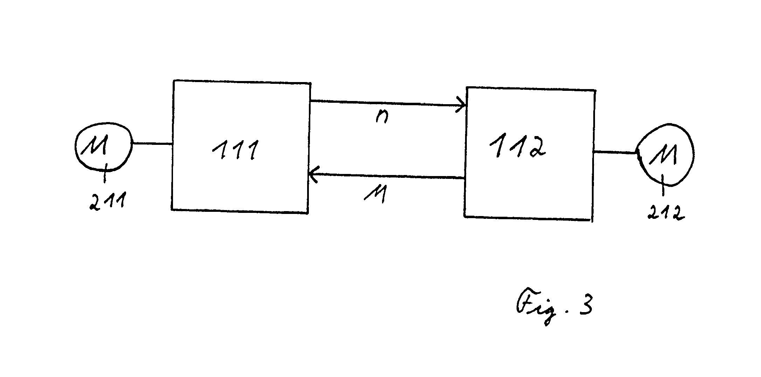

In der Figur 3 ist ein weiteres Ausführungsbeispiel gezeigt. Der vordere Motor 212 wird vom Frequenzumrichter 112 in Drehzahlregelung angesteuert. Ein Bruchteil des benötigten Drehmomentes wird berechnet und die Information dieses Wertes M an den Frequenzumrichter 111 übertragen, der den hinteren Motor 211 ansteuert. Dieser Frequenzumrichter 111 arbeitet in Drehmomentregelung und regelt das Drehmoment des hinteren Motors 211 auf den Wert M hin. Die Information des Wertes der momentanen Drehzahl n des Frequenzumrichters 111 wird auch übertragen an den Frequenzumrichter 112. Dieser wählt für seine Drehzahlregelung als Istwert das Maximum der Drehzahl n und der Drehzahl des Motors 212 aus.

In den vorgenannten Ausführungsbeispielen ist 'vorne' und 'hinten' vertauschbar. Je nach Bewegungsrichtung gilt jeweils auch die vertauschte Version.

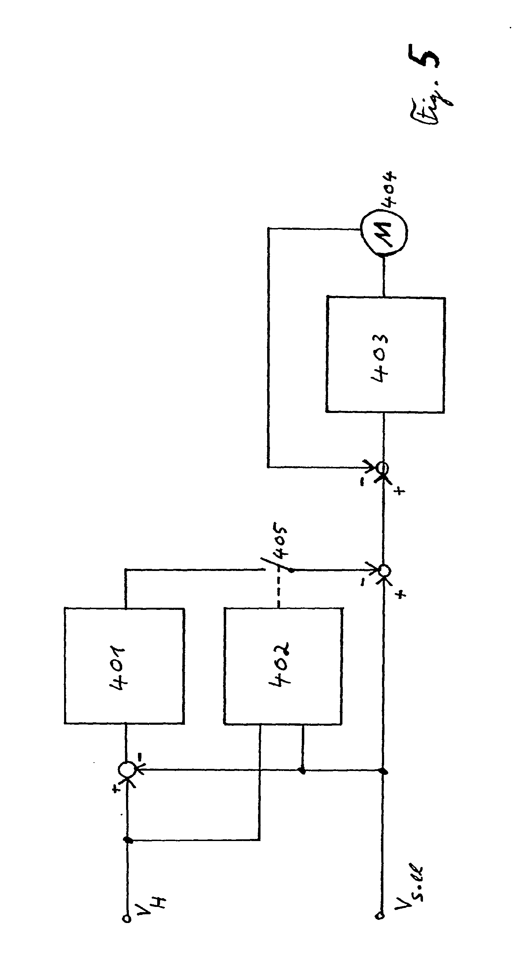

Anhand der Figur 5 wird nun ein weiteres Ausführungsbeispiel erläutert, insbesondere als Beispiel eines Regelverfahrens.

Beim vorderen Antrieb wird die Drehzahl oder Geschwindigkeit v_{H} erfaßt und dem Frequenzumrichter zugeführt. Der Komparator 402 vergleicht den Wert v_{H} mit dem Sollwert vₛₒₗₗ. Solange der Betrag von v_{H} kleiner ist als der Betrag des Sollwertes v_{Soll} bleibt der Schalter 405 offen. In diesem Fall arbeitet der vordere Antrieb, der den vorderen Motor 404 umfaßt, in Drehzahlregelung. Der Regler 403 regelt den Motor derart, daß der am Motor erfaßte Istwert sich dem Sollwert v_{Soll} möglichst angleicht. Der Regler 403 kann insbesondere als PI-Regler ausgeführt sein. Dem Regler 403 wird die Differenz aus Soll- und Istwert zugeführt.

Wenn beispielsweise beim Einfahren in eine Kurve der Betrag des hinteren erfaßten Meßwertes v_{H} den Betrag des Sollwertes v_{Soll} überschreitet, wird der Schalter 405 vom Komparator 402 geschlossen. In diesem Fall beeinflußt der Ausgang des Reglers 401 den Sollwert des Drehzahlreglers 403 so lange, bis der am hinteren Antrieb erfaßte Wert v_{H} mit dem Sollwert v_{Soll} übereinstimmt.

Beim Einfahren in eine Kurve arbeitet der in diesem Ausführungsbeispiel beschriebene Regelkreis als Drehzahlregler mit vorderem Antrieb ohne Beeinflußung durch die hinten erfaßten Meßwerte. Beim Austreten des vorderen aus der Kurve in eine Gerade bedeutet dies, daß der Sollwert des Drehzahlreglers 403 so lange reduziert wird bis der am hinteren Antrieb erfaßte Wert der Drehzahl dem vorgegebenen Sollwert vₛₒₗₗ entspricht.

Bei einem weiteren Ausführungsbeispiel besitzt das Regalföderfahrzeug auch hinten wiederum einen Antrieb. Dieser bekommt von dem vorderen Antrieb eine im Regler 403 berechnete Sollwertvorgabe für einen Drehmomentenwert entsprechend der Figur 3 und dem zugehörigen Ausführungsbeispiel.

## Patentansprüche

1. Verfahren zum Durchfahren einer Strecke mit einem kurvengängigen Regalförderfahrzeug (10) mit mindestens einem Antrieb,
wobei die Strecke mindestens eine Änderung des Krümmungsradius aufweist
**dadurch gekennzeichnet, daß**
- der Antrieb mindestens einen Elektromotor (211, 212) mit Frequenzumrichter (111, 112) umfaßt,
- und daß an mindestens zwei, in Streckenrichtung voneinander beabstandeten Orten Bewegungsgrößen des Regalföderfahrzeuges erfaßt werden und deren Werte mindestens einem Frequenzumrichter zugeführt werden,
- und daß ein Regelverfahren verwendet wird, dem die mindestens beiden erfaßten Bewegungsgrößen zugeführt werden zur Regelung auf einen Sollwert hin,
- und daß als Istwert für das Regelverfahren der Größte der mindestens beiden erfaßten Bewegungsgrößen verwendet wird.

2. Verfahren zum Durchfahren eine Strecke nach Anspruch 1
**dadurch gekennzeichnet, daß**
eine Änderung des Krümmungsradius erfaßt wird.

3. Verfahren zum Durchfahren einer Strecke nach Anspruch 1 oder 2
**dadurch gekennzeichnet, daß**
der Sollwert nach Erfassung der Änderung des Krümmungsradius verändert wird.

4. Verfahren zum Durchfahren einer Strecke nach einem der vorangegangenen Ansprüche
**dadurch gekennzeichnet, daß**
Parameter des Regelverfahrens, wie P-Verstärkung, I-Verstärkung, Vorsteuerung oder dergleichen, abhängig von den erfaßten Werten der Bewegungsgrößen verändert werden.

5. Verfahren zum Durchfahren einer Strecke nach einem der vorangegangenen Ansprüche,
**dadurch gekennzeichnet, daß**
als Bewegungsgrößen Bahngeschwindigkeiten, Drehzahlen, Winkelgeschwindigkeiten oder Winkelgeschwindigkeiten zweier Räder, insbesondere eines Vorderrades und eines Hinterrades, verwendet werden.

6. Verfahren zum Durchfahren einer Strecke nach einem der vorangegangenen Ansprüche,
**dadurch gekennzeichnet, daß**
die Strecke derart gestaltet ist, daß der Krümmungsradius sich mindestens an einer Stelle der Strecke von etwa unendlich auf einen endlichen Wert oder Wertebereich ändert.

7. Verfahren zum Durchfahren einer Strecke nach einem der vorangegangenen Ansprüche
**dadurch gekennzeichnet, daß**
ein erster Regler eines Antriebs die Drehzahl auf den Sollwert der Drehzahl regelt
und daß ein zweiter Regler eines weiteren, beabstandeten Antriebs einen Sollwert für ein Drehmoment vom ersten Antrieb erhält und das Drehmoment auf diesen Wert regelt.

8. Verfahren zum Durchfahren einer Strecke nach einem der vorangegangenen Ansprüche
**dadurch gekennzeichnet, daß**
der Sollwert des Drehmoments ein Bruchteil, insbesondere die Hälfte, des gesamten Drehmomentes beträgt und dieser Bruchteil ein vorgebbarer Wert ist.

9. Verfahren zum Durchfahren einer Strecke nach einem der vorangegangenen Ansprüche
**dadurch gekennzeichnet, daß**
die Änderung des Krümmungsradius durch Auswertung der Istwerte der Drehzahlen erfaßt wird.

10. Verfahren zum Durchfahren einer Strecke nach einem der vorangegangenen Ansprüche
**dadurch gekennzeichnet, daß**
die Änderung des Krümmungsradius durch Überschreiten oder Unterschreiten eines um Null liegenden Toleranzbandes für die Differenz der Drehzahlen von vorderem und hinterem Antrieb erfaßt wird.

11. Kurvengängiges Regalförderfahrzeug mit mindestens einem Antrieb zum Durchfahren einer Strecke zur Durchführung eines Verfahrens nach mindestens einem der Ansprüche 1 bis 10,
**dadurch gekennzeichnet, daß**
- der Antrieb mindestens einen Elektromotor (211, 212) mit Frequenzumrichter (111, 112) umfaßt,
- und daß auf dem Regalförderfahrzeug an mindestens zwei, in Streckenrichtung voneinander beabstandeten Positionen, Vorrichtungen zur Erfassung von Bewegungsgrößen angeordnet sind,
- und daß Übertragung von Signalen von den Vorrichtungen zu Frequenzumrichtern ausführbar sind und hierfür entsprechende Vorrichtungen ausgebildet sind,
- und daß mindestens ein Frequenzumrichter mindestens einen Regler aufweist.

12. Kurvengängiges Regalförderfahrzeug nach einem der vorangegangenen Ansprüche,
**dadurch gekennzeichnet, daß**
die eingesetzten Elektromotoren Asynchronmotoren oder Synchronmotoren sind.

13. Kurvengängiges Regalförderfahrzeug nach einem der vorangegangenen Ansprüche,
**dadurch gekennzeichnet, daß**
die Vorrichtungen zur Erfassung der Bewegungsgrößen an zwei Rädern, insbesondere am Vorderrad und am Hinterrad, angebracht sind.

14. Kurvengängiges Regalförderfahrzeug nach Anspruch 13,
**dadurch gekennzeichnet, daß**
das Regalförderfahrzeug einen Antrieb mit Erfassung der Drehzahl am Vorderrad besitzt und einen Antrieb mit Erfassung der Drehzahl am Hinterrad besitzt, wobei jeder Antrieb mindestens einen Frequenzumrichter und mindestens einen Elektromotor umfaßt.

15. Kurvengängiges Regalförderfahrzeug nach einem der vorangegangenen Ansprüche,
**dadurch gekennzeichnet, daß**
die Vorrichtungen zur Erfassung der Bewegungsgrößen als Sensoren zur Erfassung von Drehzahlen, Bahngeschwindigkeiten oder Winkelgeschwindigkeiten von Rädern ausgebildet sind.

16. Kurvengängiges Regalförderfahrzeug nach einem der vorangegangenen Ansprüche,
**dadurch gekennzeichnet, daß**
die Strecke Abschnitte mit im wesentlichen unendlich großem Krümmungsradius und Kurvenabschnitte mit endlichem oder endlichem Wertebereich der Krümmungsradien umfaßt.

17. Kurvengängiges Regalförderfahrzeug nach einem der vorangegangenen Ansprüche,
**dadurch gekennzeichnet, daß**
der Regler eines Frequenzumrichters eines ersten Antriebs, insbesondere am Vorderrad die Drehzahl auf deren Sollwert regelt, und der Regler eines Frequenzumrichters eines zweiten Antriebs in Streckenrichtung vom ersten beabstandeter Antrieb, insbesondere am Hinterrad, einen Sollwert für ein Drehmoment vom ersten Antrieb erhält und sein Drehmoment auf diesen Wert regelt.

18. Kurvengängiges Regalförderfahrzeug nach einem der vorangegangenen Ansprüche,
**dadurch gekennzeichnet, daß**
das Regalförderfahrzeug Sensoren oder Sensorsysteme, wie induktive Näherungsschalter, magnetische Sensoren zusammen mit auf der Strecke feststehenden magnetischen Gebern, Lichtschranken zusammen mit Spiegeln oder dergleichen, aufweist, wobei mit den Sensoren oder Sensorsystemen die Änderung des Krümmungsradius erfassbar ist.

## Claims

1. A method of travelling over a track with a curve-going high-rack stacker crane (10) with at least one drive,
wherein the track has at least one change in the radius of curvature,
**characterized in that**
- the drive comprises at least one electric motor (211, 212) with a frequency converter (111, 112),
- and movement variables of the high-rack stacker crane are detected at at least two locations spaced apart from each other in the direction of the track and their values are supplied to at least one frequency converter,
- and a regulating method is used, to which the at least two movement variables detected are supplied for regulation to a nominal value,
- and the greatest of the at least two movement variables detected is used as an actual value for the regulating method.

2. A method of travelling over a track according to Claim 1, **characterized in that** a change in the radius of curvature is detected.

3. A method of travelling over a track according to Claim 1 or 2, **characterized in that** the nominal value is changed after the change in the radius of curvature has been detected.

4. A method of travelling over a track according to any one of the preceding Claims, **characterized in that** parameters of the regulating method, such as P-amplification, I-amplification, pilot control or the like, are changed in a manner dependent upon the detected values of the movement variables.

5. A method of travelling over a track according to any one of the preceding Claims, **characterized in that** track speeds, rotational speeds, angular velocities or angular velocities of two wheels, in particular a front wheel and a rear wheel, are used as the movement variables.

6. A method of travelling over a track according to any one of the preceding Claims, **characterized in that** the track is arranged in such a way that the radius of curvature changes from substantially infinite to a finite value or range of values at least at one location on the track.

7. A method of travelling over a track according to any one of the preceding Claims, **characterized in that** a first regulator of a drive regulates the rotational speed to the nominal value of the rotational speed, and a second regulator of a further, spaced drive receives a nominal value for a torque from the first drive and regulates the torque to this value.

8. A method of travelling over a track according to any one of the preceding Claims, **characterized in that** the nominal value of the torque amounts to a fraction, in particular half, of the total torque, and the said fraction is a value capable of being pre-set.

9. A method of travelling over a track according to any one of the preceding Claims, **characterized in that** the change in the radius of curvature is detected by evaluation of the actual values of the rotational speeds.

10. A method of travelling over a track according to any one of the preceding Claims, **characterized in that** the change in the radius of curvature is detected by exceeding or not reaching a tolerance range existing around zero for the difference in the rotational speeds of the front and the rear drive.

11. A curve-going high-rack stacker crane with at least one drive for travelling over a track for performing a method at least one of Claims 1 to 10,
**characterized in that**
- the drive comprises at least one electric motor (211, 212) with a frequency converter (111, 112),
- and devices for detecting movement variables are arranged on the high-rack stacker crane at at least two positions spaced apart from each other in the direction of the track,
- and transmission[s] of signals from the devices to frequency converters are capable of being carried out and suitable devices are designed for this,
- and at least one frequency converter has at least one regulator.

12. A curve-going high-rack stacker crane according to any one of the preceding Claims, **characterized in that** the electric motors used are asynchronous or synchronous motors.

13. A curve-going high-rack stacker crane according to any one of the preceding Claims, **characterized in that** the devices for detecting the movement variables are mounted on two wheels, in particular on the front wheel and on the rear wheel.

14. A curve-going high-rack stacker crane according to Claim 13, **characterized in that** the high-rack stacker crane has a drive for detecting the rotational speed at the front wheel and a drive for detecting the rotational speed at the rear wheel, wherein each drive comprises at least one frequency converter and at least one electric motor.

15. A curve-going high-rack stacker crane according to any one of the preceding Claims, **characterized in that** the devices for detecting the movement variables are designed in the form of sensors for detecting rotational speeds, speeds along the track or angular velocities of wheels.

16. A curve-going high-rack stacker crane according to any one of the preceding Claims, **characterized in that** the tracks comprise portions with a substantially infinitely large radius of curvature and curved portions with a finite or infinite range of values of the radii of curvature.

17. A curve-going high-rack stacker crane according to any one of the preceding Claims, **characterized in that** the regulator of a frequency converter of a first drive, in particular on the front wheel, regulates the rotational speed to its nominal value, and the regulator of a frequency converter of a second drive in the direction of the track from the first spaced drive, in particular on the rear wheel, receives a nominal value for a torque from the first drive and regulates its torque to the said value.

18. A curve-going high-rack stacker crane according to any one of the preceding Claims, **characterized in that** the high-rack stacker crane has sensors or sensor systems, such as inductive proximity switches, magnetic sensors together with magnetic transmitters fixed on the track, light barriers together with mirrors or the like, wherein the change in the radius of curvature is capable of being detected by the sensors or sensor systems.

## Revendications

1. Procédé pour parcourir une voie à l'aide d'une grue gerbeuse (10) pouvant négocier des courbes et équipée d'au moins un entraînement,
ladite voie présentant au moins une variation du rayon de courbure,
**caractérisé par le fait**
- **que** l'entraînement englobe au moins un moteur électrique (211, 212) à mutateur de fréquence (111, 112) ;
- **que** des grandeurs de mouvement de la grue gerbeuse sont détectées en au moins deux emplacements distants l'un de l'autre dans la direction de la voie, puis les valeurs desdites grandeurs sont appliquées à au moins un mutateur de fréquence ;
- **qu'**il est appliqué un procédé de régulation selon lequel les grandeurs de mouvement détectées, au nombre minimal de deux, sont appliquées en vue de la régulation sur une valeur de consigne ;
- et **que** la grandeur maximale, parmi les grandeurs de mouvement détectées au nombre minimal de deux, est utilisée en tant que valeur réelle pour le procédé de régulation.

2. Procédé pour parcourir une voie, selon la revendication 1,
**caractérisé par le fait**
**qu'**une variation du rayon de courbure est détectée.

3. Procédé pour parcourir une voie, selon la revendication 1 ou 2,
**caractérisé par le fait**
**que** la valeur de consigne est modifiée après détection de la variation du rayon de courbure.

4. Procédé pour parcourir une voie, selon l'une des revendications précédentes,
**caractérisé par le fait**
**que** des paramètres du procédé de régulation, tels qu'une amplification P, une amplification I, une commande pilote ou une opération similaire, sont modifiés en fonction des valeurs détectées des grandeurs de mouvement.

5. Procédé pour parcourir une voie, selon l'une des revendications précédentes,
**caractérisé par le fait**
**que** des vitesses de roulement, des vitesses de rotation, des vitesses angulaires ou des vitesses angulaires de deux roues, en particulier d'une roue avant et d'une roue arrière, sont utilisées en tant que grandeurs de mouvement.

6. Procédé pour parcourir une voie, selon l'une des revendications précédentes,
**caractérisé par le fait**
**que** la voie est conçue de façon telle que le rayon de courbure varie, en au moins un emplacement de ladite voie, pour passer d'une valeur ou d'une plage de valeurs sensiblement infinie, à une valeur ou une plage de valeurs finie.

7. Procédé pour parcourir une voie, selon l'une des revendications précédentes,
**caractérisé par le fait**
**qu'**un premier régulateur d'un entraînement régule la vitesse angulaire sur la valeur de consigne de la vitesse angulaire ;
et par le fait qu'un second régulateur d'un autre entraînement distant reçoit une valeur de consigne pour un couple de rotation, en provenance du premier entraînement, puis régule ledit couple de rotation sur cette valeur.

8. Procédé pour parcourir une voie, selon l'une des revendications précédentes,
**caractérisé par le fait**
**que** la valeur de consigne du couple de rotation représente une fraction, en particulier la moitié du couple de rotation intégral, et cette fraction est une valeur pouvant être préétablie.

9. Procédé pour parcourir une voie, selon l'une des revendications précédentes,
**caractérisé par le fait**
**que** la variation du rayon de courbure est détectée par interprétation des valeurs réelles des vitesses angulaires.

10. Procédé pour parcourir une voie, selon l'une des revendications précédentes,
**caractérisé par le fait**
**que** la variation du rayon de courbure est détectée par dépassement ou dépassement négatif d'une bande de tolérance, avoisinant zéro, pour la différence des vitesses angulaires des entraînements avant et arrière.

11. Grue gerbeuse pouvant négocier des courbes et équipée d'au moins un entraînement pour parcourir une voie, en vue de la mise en oeuvre d'un procédé selon au moins l'une des revendications 1 à 10,
**caractérisée par le fait**
- **que** l'entraînement englobe au moins un moteur électrique (211, 212) à mutateur de fréquence (111, 112) ;
- **que** des dispositifs de détection de grandeurs de mouvement sont installés sur la grue gerbeuse, en au moins deux emplacements distants l'un de l'autre dans la direction de la voie ;
- **que** des transmissions de signaux peuvent s'effectuer depuis les dispositifs vers des mutateurs de fréquence, et des dispositifs correspondants sont réalisés à cette fin ;
- et **qu'**au moins un mutateur de fréquence présente au moins un régulateur.

12. Grue gerbeuse pouvant négocier des courbes, selon l'une des revendications précédentes,
**caractérisée par le fait**
**que** les moteurs électriques utilisés sont des moteurs asynchrones ou des moteurs synchrones.

13. Grue gerbeuse pouvant négocier des courbes, selon l'une des revendications précédentes,
**caractérisée par le fait**
**que** les dispositifs de détection des grandeurs de mouvement sont implantés sur deux roues, en particulier sur la roue avant et sur la roue arrière.

14. Grue gerbeuse pouvant négocier des courbes, selon la revendication 13,
**caractérisée par le fait**
**que** ladite grue gerbeuse possède un entraînement avec détection de la vitesse angulaire sur la roue avant et un entraînement avec détection de la vitesse angulaire sur la roue arrière, chaque entraînement englobant au moins un mutateur de fréquence et au moins un moteur électrique.

15. Grue gerbeuse pouvant négocier des courbes, selon l'une des revendications précédentes,
**caractérisée par le fait**
**que** les dispositifs de détection des grandeurs de mouvement sont réalisés sous la forme de sondes de détection de vitesses de rotation, de vitesses de roulement ou de vitesses angulaires de roues.

16. Grue gerbeuse pouvant négocier des courbes, selon l'une des revendications précédentes,
**caractérisée par le fait**
**que** la voie comprend des tronçons à rayon de courbure de grandeur sensiblement infinie, et des tronçons courbes dont les rayons de courbure se situent dans une plage de valeurs finie ou infinie.

17. Grue gerbeuse pouvant négocier des courbes, selon l'une des revendications précédentes,
**caractérisée par le fait**
**que** le régulateur d'un mutateur de fréquence d'un premier entraînement, notamment sur la roue avant, régule la vitesse angulaire sur sa valeur de consigne, et le régulateur d'un mutateur de fréquence d'un second entraînement éloigné du premier entraînement dans la direction de la voie, en particulier sur la roue arrière, reçoit une valeur de consigne pour un couple de rotation, en provenance du premier entraînement, et régule son couple de rotation sur cette valeur.

18. Grue gerbeuse pouvant négocier des courbes, selon l'une des revendications précédentes,
**caractérisée par le fait**
**que** ladite grue gerbeuse présente des sondes ou des systèmes de détection tels que des interrupteurs inductifs de proximité, des capteurs magnétiques associés à des émetteurs magnétiques fixes sur la voie, des barrières photoélectriques associées à des miroirs, ou des systèmes similaires, la variation du rayon de courbure pouvant être détectée à l'aide desdites sondes ou desdits systèmes de détection.
